# EUROPEAN PATENT SPECIFICATION

(11) **EP 0 606 927 B1**
(45) Date of publication and mention of the grant of the patent: **04.03.1998**
(21) Application number: 94103476.1
(22) Date of filing: 23.10.1991
(51) Int. Cl.: B62K 19/46, B62J 35/00, E05B 65/36

(54) **Fuel tank lid assembly of motorcycle**
Kraftstofftankeinrichtung für Motorrad
Dispositif de réservoir à carburant pour motocycle

(30) Priority: 24.10.1990 JP 284131/90; 24.10.1990 JP 284132/90; 24.10.1990 JP 284134/90
(43) Date of publication of application: 20.07.1994
(62) Divisional of application: 91118072.7
(73) Proprietor: SUZUKI KABUSHIKI KAISHA, Shizuoka-Ken (JP)
(72) Inventor: Kawasaki, Keizo, Hamamatsu-Shi, Shizuoka-Ken (JP); Shibuya, Izumi, Inasa-Gun, Shizuoka-Ken (JP)
(74) Representative: Klunker . Schmitt-Nilson . Hirsch

(56) References cited:
- EP-A- 0 323 908
- EP-A- 0 404 195
- FR-A- 2 636 036
- US-A- 4 907 428

## Description

The present invention relates to a motorcycle comprising a lid assembly for a fuel tank according to the pre-characterizing part of claim 1.

A motorcycle of this type (specifically a motorscooter) is known from EP-A-0 404 195. In this prior art motorcycle, the fuel tank lid locking device is connected with an operating leaver through a cable, a cable running from the lid assembly through the foot rest floor to a position in the near of the handle bar. The seat is a two piece construction. An article accommodation box is provided beneath the rear seat portion.

In a further recent design of the scooter-type vehicle, an article accommodation box particularly for accommodating a helmet is arranged below the seat (EP-A-0 323 908). Such location of the helmet accommodation box below the seat requires to displace the location of the fuel tank e. g. behind the accommodation box, that is, to a rear portion of the vehicle body and, in such design, the fuel tank is disposed inside a seat tail cover behind the seat. According to said EP-A-0 323 908, the fuel tank is disposed beneath the foot rest floor.

In such arrangement of the scooter-type vehicle, a relatively large oil supply opening is formed to an upper portion of the seat tail cover so as to face the oil port of the fuel tank. A fuel tank lid is provided for the oil supply opening to be closed or opened, thus performing the oil supplying.

According to the arrangement of the oil supply opening of the conventional scooter-type vechicle described above, since the large oil supply opening is formed to the top portion of the seat tail cover at the rear portion of the seat, the size of a carrier disposed on the seat tail cover is limited or, hence, it may become difficult to open or close the fuel tank lid and become impossible to supply the oil when a large article is rested on the carrier. In addition, when the fuel tank lid is provided with a locking device, independent from a seat lock device, which is operated by key means, for example, the assembling of the fuel lid is made to be complicated and the key operation of the locking device is also made troblesome.

An object of the present invention is to provide a motorcycle having a fuel tank lid assembly eliminating a working for providing an independent lid lock mechanism and capable of opening and closing the fuel tank lid by commonly utilizing a seat lock assembly.

This object can be achieved according to the present invention, by the features of claim 1.

In preferred embodiments the fuel tank lid locking device includes a lid lock bracket secured to the side cover and a lid openner assembly mounted to the lid lock bracket, the lid openner assembly including a pivotal link mechanism. A seal plate is disposed inside the side cover so as to seal, from inside, a gap existing between an inner edge of the opening and an outer peripheral edge of the fuel tank lid. The fuel tank lid is provided with a hinge means for pivotally mounting the fuel tank lid thereabout, the hinge means being hinged to the side cover at one end of the fuel tank lid and the seal plate is mounted to the hinge means.

The seat lock device includes a cylinder key assembly secured to the rear body of the motorcycle, the cylinder key assembly has a cylinder head portion exposed externally, a lid lock arm member and a seat lock arm member, the lid lock arm member and the seat lock member are disposed pivotally in a cylinder body of the cylinder key assembly so as to have a common axis. The lock cable means is connected at one end to the lid lock arm. A key hole into which a key is inserted is formed to the cylinder head portion and the fuel tank lid locking device and the seat lock device is selectively locked and unlocked by rotating the key inserted into the key hole in different directions.

The fuel tank lid is locked and unlocked by the fuel tank lid locking mechanism disposed inside the side cover which is engaged with an engaging member of the fuel tank lid disposed also inside the side cover, so that the locking members are entirely disposed inside the side cover, thus erroneous operation of the fuel tank lid locking device from the outside of the motorcycle can be prevented and the outer apperance can also be improved.

The fuel tank lid locking device is disposed so as to commonly operated with the seat lock device, so that the independent location of the fuel tank lid locking device can be eliminated. Accordingly, any member for safely attaching the fuel tank lid locking device can be also eliminated, thus making easy and compact the fuel tank lid and also maiking it posible to construct the fuel tank lid with light weight with reduced working and cost. Furthermore, the fuel tank lid locking device is connected to the seat lock device through the lock cable means so that the seat locking operation and the fuel tank lid locking operation can be selectively performed only by the operation of the key. Accordingly, the locking and unlocking operations of the seat lock device and the fuel tank lid locking device can be easily managed in a smooth manner with no troublesome working.

### BRIEF DESCRIPTION OF THE DRAWINGS

For a better understanding of the present invention and to show how the same is carried out, reference is made, by way of preferred embodiments, to the drawings, in which:
Fig. 1 is a schematic side view of a motorcycle provided with a fuel tank lid assembly according to the present invention;
Fig. 2 is a perspective view of one embodiment of the fuel tank lid assembly according to the present invention;
Fig. 3 is a perspective view of a side cover applied to the motorcycle and provided with the fuel tank lid assembly of Fig. 2;
Fig. 4 is view of the fuel tank lid of Fig. 3, in an enlarged scale;
Fig. 5 is a developed view showing parts and elements constituting the fuel tank lid assembly;
Fig. 6 is a perspective view of a fuel tank lid locking device provided for the fuel tank lid assembly;
Fig. 7 is a view, partially broken away, of a cable means provided for the fuel tank lid locking device of Fig. 6;

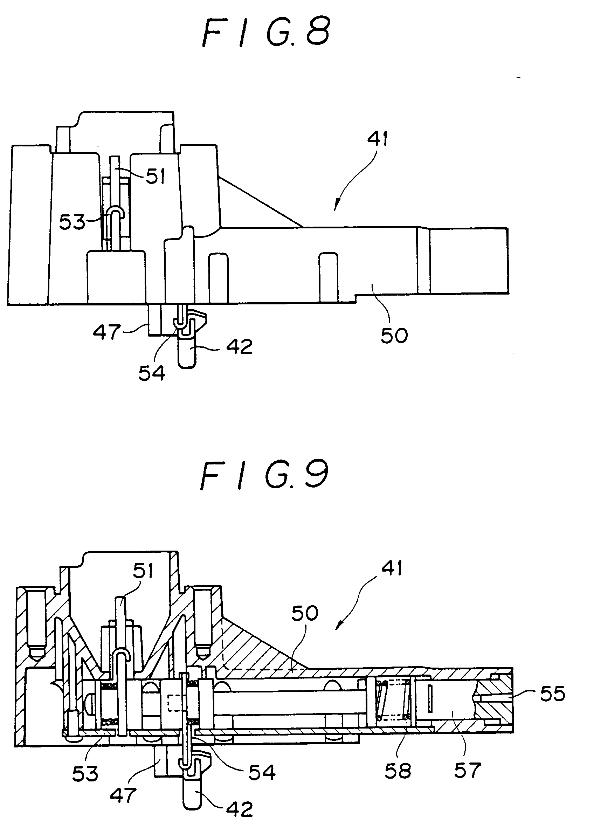

Fig. 8 is a schematic view of a cylinder key assembly for carrying out a fuel tank lid locking operatin;
Fig. 9 is an elevational section of the cylinder key assembly of Fig. 8;
Fig. 10 is a view of the cylinder key assembly viewed from the head side thereof;
Fig. 11 is a sectional view of a seat locking mechanism of the cylinder key assembly; and
Fig. 12 is a sectional view of a lid lock mechanism of the cylinder key assembly.

### DESCRIPTION OF THE PREFERRED EMBODIMENTS

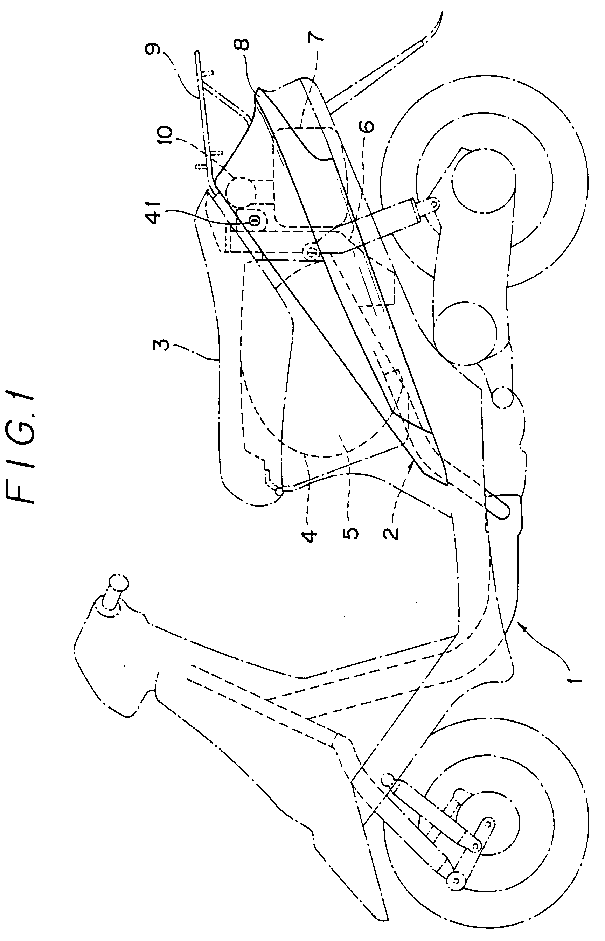

Fig. 1 shows a schematic view of a scooter-type vehicle provided with a fuel tank lid assembly according to the present invention. The scooter-type vehicle is provided with a vehicle body 1 including a rear body 2 on which a seat 3 is disposed to be capable of being opened and closed. An article accommodation box or chamber 5 for especially accommodating a helmet 4 or the like is disposed below the seat 3, and an oil tank 6 and a fuel tank 7 are arranged behind the article accommodation box 5.

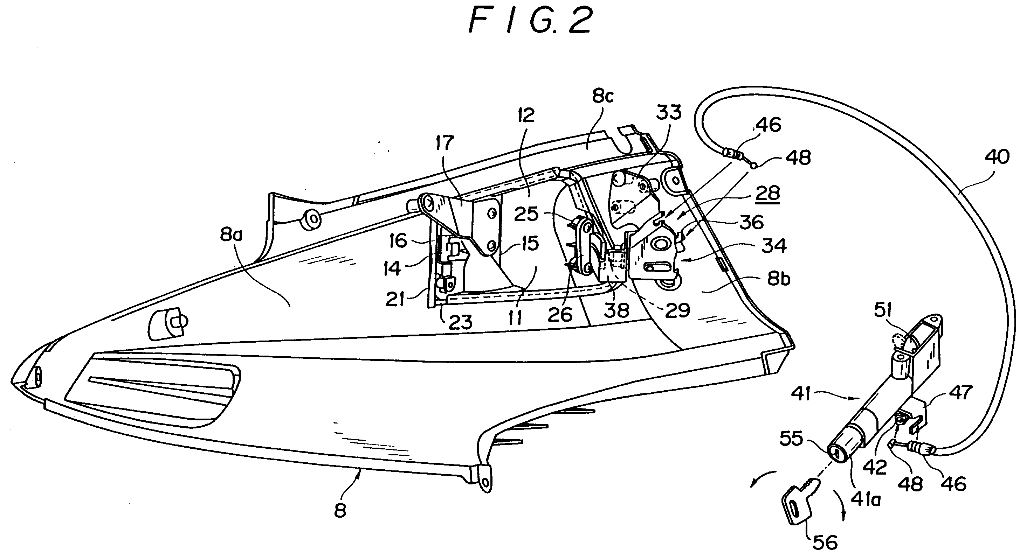

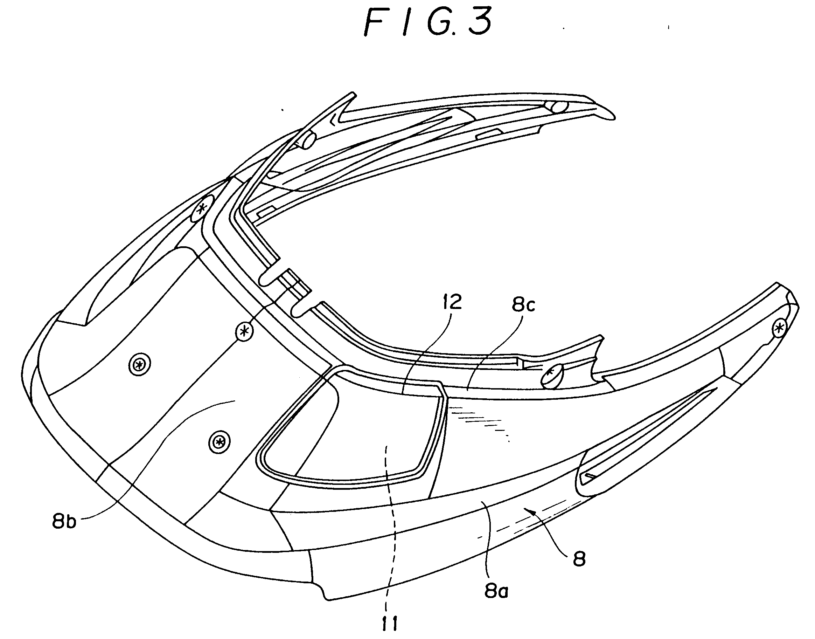

A side cover 8, having a structure splittable into lateral two parts, is mounted to the rear body 2 of the vehicle body 1 as shown in Fig. 2 or 3, the side cover 8 constituting a rear cowling of the vehicle. The fuel tank 7 is disposed inside the side cover 8 and a carrier 9 is disposed above the fuel tank 7. The carrier 9 is fixed to the rear body 2 to maintain the strength thereof.

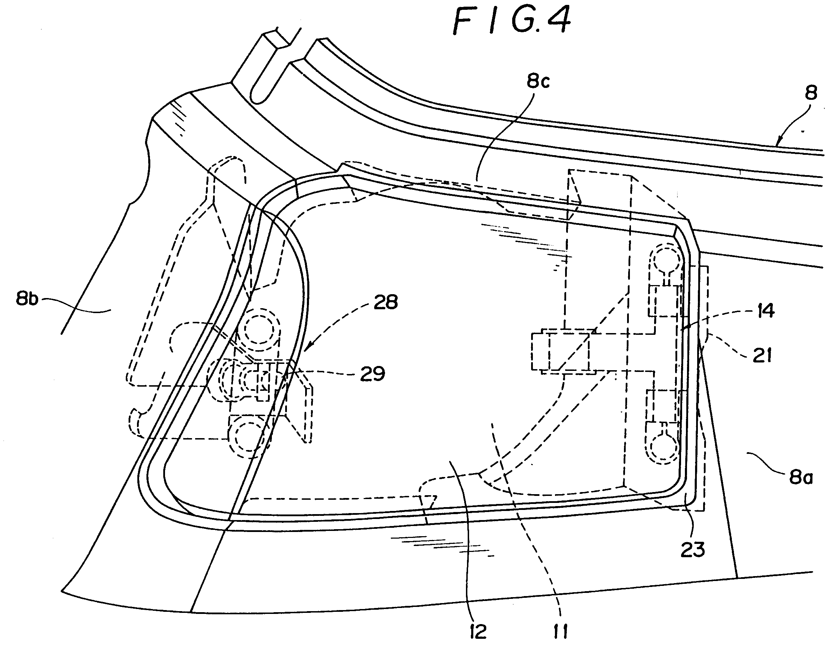

To the side cover 8 is formed an oil supply opening 11 at a portion facing an oil port 10 of the fuel tank 7 and the opening 11 is formed for the access to the oil port 10 of the fuel tank 7 and covered with a lid 12, which is called hereinlater a fuel tank lid 12. As shown in Figs. 3 and 4, the side cover 8 comprises a side portion 8a, a rear portion 8b and an upper portion 8c and the opening 11 is positioned to a curved portion of the rear and upper portions 8b and 8c continuous to the side portion 8a. The fuel tank lid 12 for covering the opening 11 is formed so as to have a smooth curved shape substantially flash with the curved shape of the side cover 8. Such curved shape of the fuel tank lid 12 increases its rigidity to strengthen the same. Accordingly, it is not necessary to form reinforcing ribs to the fuel tank lid 12 as made in the conventional lid, thus eliminating the consumption of the material therefor.

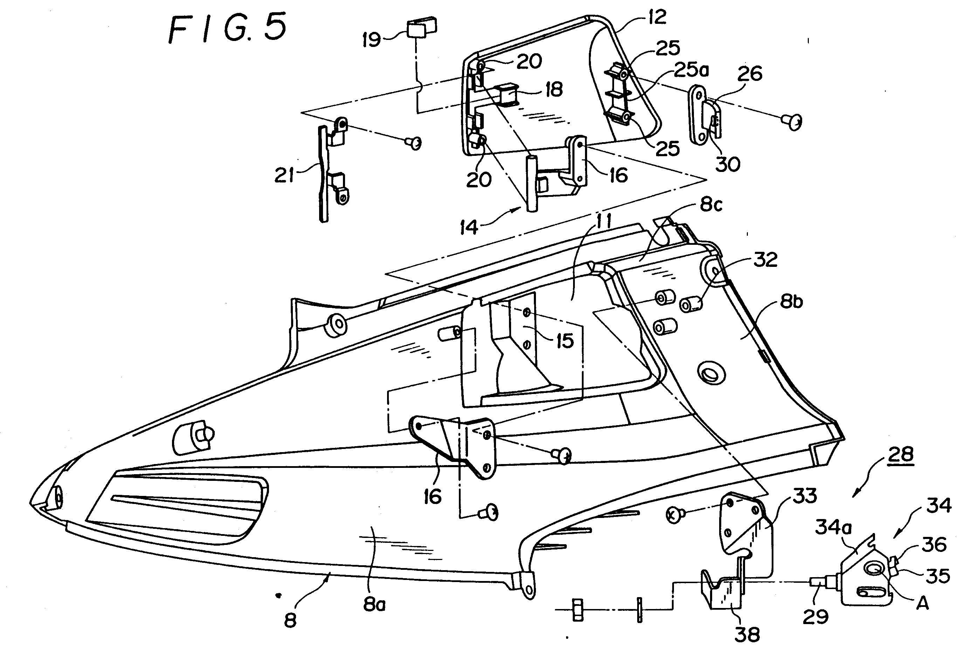

As shown in Figs. 2, 4 and 5, the fuel tank lid 12 is opened and closed by means of a lid hinge device 14. The lid hinge device 14 comprises a bridge member 15 secured so as to span one side (front side) of the opening 11 from the inside and a lid hinge member 16 secured to the bridge member 15. One side (front side) of the fuel tank lid 12 is hinged to the hinge member 16, and the bridge member 15 is reinforced by a lid bracket 17 secured inside the side cover 8.

A spring receptacle seat member 18 is attached to the central portion of the front side of the fuel tank lid 12 and a spring 19 such as plate spring is mounted to the spring receptacle seat member 18 so that the fuel tank lid 12 is always urged by the spring 19 in a direction opening the fuel tank lid 12.

A pair of attachment bosses 20 are integrally disposed on both sides of the hinge connecting portion of the fuel tank lid 12 and a seal plate 21 made of an elastic material such as rubber is secured to the attachment bosses 20. The seal plate 21 is disposed so as to cover a gap 23 between the inner edge of the opening 11 of the side cover 8 and the outer peripheral edge of the fuel tank lid 12 from the inside thereof, thus improving an outer apperance of the attachment of the fuel tank lid 12.

A pair of attachment bosses 25 are located on the other side (rear side) of the fuel tank lid 12 and these attachement bosses 25 are interconnected by a reinforcing rib 25a in a standing manner. An engaging hook member 26 is secured to the attachment bosses 25 at its one end and an engaging hole 30 to be engaged with a lock pin 29 of a fuel tank lid locking device 28 is formed to the other end of the engaging hook member 26. The fuel tank lid locking device 28 constitutes a lid lock assembly for the fuel tank lid 12.

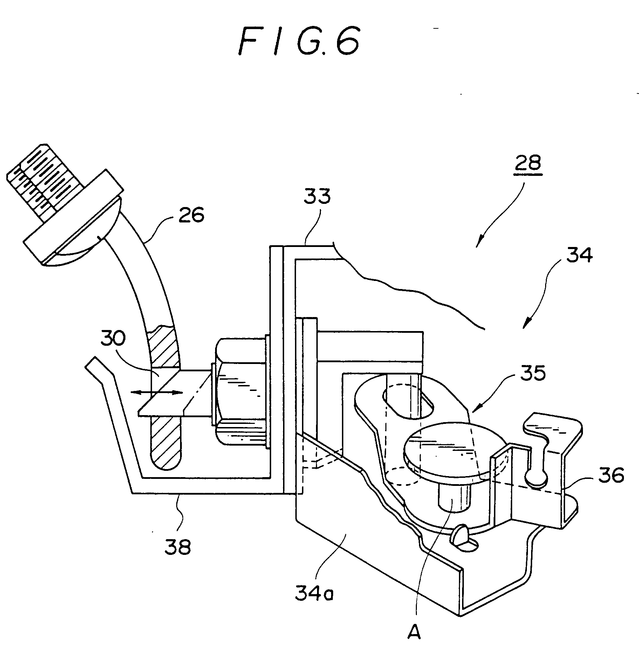

The fuel tank lid locking device 28 comprises, as best shown in Fig. 6, a lid lock bracket 33 secured to a plurality of attachment bosses 32 provided inside the rear portion of the side cover 8 in a standing manner and a lid opener assembly 34 mounted to the lid lock bracket 33. The lid opener assembly 34 includes a pivotal link mechanism 35 including a link lever 36 pivotal about a support pin A and the link mechanism 35 is connected to the lock pin 29 so that the lock pin 29 is projected and retracted by the swing motion of the link lever 36. The link lever 36 always urges the lock pin 29 by a spring member, not shown, so as to take a projected lock position. A guide bracket 38 having substantially U-shape in section is formed or secured integrally with the lid lock bracket 33, and the engaging hook member 26 secured to the fuel tank lid 12 is guided by the guide bracket 38 to prevent the engaging hook 26 from disengaging in the locking condition.

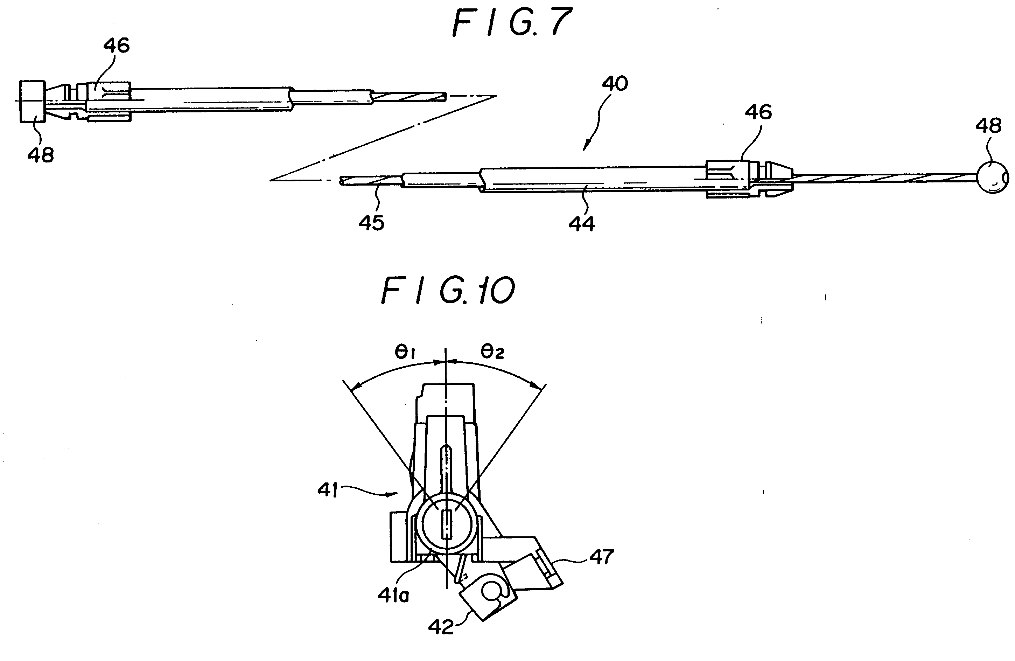

As shown in Figs. 2 and 7, the link mechanism 35 of the fuel tank lid locking device 28 is operatively connected, through a lock cable 40, to a lid lock arm 42 of a cylinder key assembly 41 constituting a seat locking device. The cable 40 is composed of an outer casing 44 and an inner cable 45 slidably accommodated inside the outer casing 44. Both the ends of the outer casing 44 are closed by casing caps 46 which are mounted, at one end, to a fixing casing 34a of the lid opener assembly 34 and, at the other end, to a fixing bracket 47 of the cylinder key assembly 41. Expanded end members 48 are mounted to both the ends of the inner cable 45 extending outward from both the ends of the outer casing 44, and the expanded end members 48 are engaged with the lid lock arm 42 of the cylinder key assembly 41 and the link lever 36 of the lid opener assembly 28, respectively.

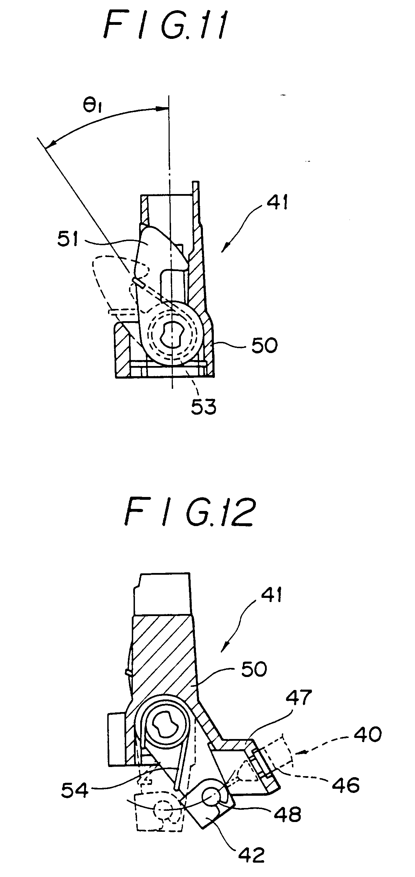

The cylinder key 41 is mounted in the rear body 2 of the vehicle body 1 and a head portion 41a of the cylinder key assembly 41 is exposed externally from the side cover 8 as shown in Fig. 1. The cylinder key assembly 41 has an inner structure such as shown in Fig. 9, in which a seat lock arm (locking powl) 51 and the lid lock arm 42 are supported to be relatively rotatable in a cylinder body of the cylinder key assembly 41. Both the arms 42 and 51 are disposed on a common axial line and always urged toward the lock position sides by means of spring.

The seat lock arm 51 is engaged with an engaging member, not shown, such as engaging hook, secured to the seat rear portion which is to be opened and closed to thereby limit the opening and closing the seat 3. When it is required to open the seat 3, a key 56 (Fig. 2) is inserted into a key hole 55 of the cylinder key assembly 41 and the key 56 is then rotated in a counterclockwise direction in Fig. 10 by a predetermined angle θ₁, for example, about 35°. Then, the seat lock arm 51 is swung through a tumbler 57 from the locking position shown by a solid line in Fig. 11 to the unlocking position shown by a broken line, thus releasing the seat lock arm 51 and hence opening the seat 3. The key 56 is automatically returned to the original position by the spring force of the lock spring 53 after the releasing of the seat lock arm 51.

The tumbler 57 is always urged toward a push-out side in the cylinder block 50 of the cylinder key assembly 41 by a push-out spring 58, and when the key 56 is inserted and pushed into the key hole 55, the tumbler 57 is displaced and the key 56 is operatively connected to the lid lock arm side through the tumbler 57.

Under this state, when the key is rotated in the clockwise direction by a predetermined angle θ₂, for example, about 35°, as shown in Fig. 10, the lid lock arm 42 is swung from the locking position shown by a solid line in Fig. 12 to the unlocking position shown by a broken line. This swinging force is transmitted to the link mechanism 35 of the lid opener assembly 34 through the cable 40, thereby rotating the link lever about the support pin A and hence retracting the lock pin 29 from the locking position to the unlocking position shwon by a broken line in Fig. 6.

According to the retraction of the lock pin 29 to the unlocking position, the fuel tank lid device 28 is opened and the fuel tank lid 12 is also opened by the action of the spring 19, thus enabling the oil supply into the fuel tank 7.

When the key 56 is released, the tumbler 57 is automatically returned by means of a return spring 54 engaged with the lid lock arm 42 and then to the original position by the action of the push-out spring 58. In this time, the link lever 36 of the lid opener assembly 34 is automatically returned by the spring force of a lock spring, not shown, and the lock pin 29 is automatically set to the lock position side.

In the fuel tank lid device according to the present invention, the fuel tank lid 12 mounted to the side cover of the motorcycle is also opened and closed by one cylinder key assembly 41 also carrying out the seat locking operation. In such case, the fuel tank lid 12 is attached to the rear side of the side cover 8, so that the opening and closing operations of the fuel tank lid 12 can be freely performed regardless of volume of an article rested on the carrier 9.

The oil supply to the oil tank 6 is done by opening the seat 3.

In the described embodiment, the fuel tank lid and the seat are selectively opened by rotating the cylinder key assembly in the clockwise or counterclockwise direction, but the cylinder key assembly may be composed of a multi-stage cylinder key assembly for carrying out the opening operations of the fuel tank lid and the seat in different stage.

It is to be understood that the present invention is not limited to the described embodiments and many other changes and modifications may be made without departing from scopes of the appended claims.

## Claims

1. Motorcycle, comprising a fuel tank lid assembly, the motorcycle having a side cover (8) mounted to a rear body (2) of a motorcycle body (1) as a rear cowling, an opening (11) formed to the rear cowling at a portion facing an fuel oil supply port (10) of a fuel tank (7) disposed inside the rear cowling, the fuel tank lid assembly including a fuel tank lid (12) and a fuel tank lid locking device (28) being provided inside the rear cowling for covering the opening (11) to be opened or closed, and a seat (3) which is locked by a seat lock device (41) disposed inside the rear cowling, characterized in that the seat (3) and the fuel tank lid (12) are selectively locked and unlocked through a lock cable means (40) connecting the fuel tank lid locking device (28) and the seat lock device (41).

2. The motorcycle according to claim 1, wherein the seat lock device includes a cylinder key assembly (41) secured to the rear body (2) of the motorcycle, the cylinder key assembly ( 41) has a cylinder head portion exposed externally, a lid lock arm (42) and a seat lock arm (51), the lid lock arm (42) and the seat lock arm (51) are disposed pivotally in a cylinder body (50) of the cylinder key assembly (41) so as to have a common axis.

3. The motorcycle according to claim 2, wherein the lock cable means (40) is connected at one end to the lid lock arm (42).

4. The motorcycle according to claim 2 or 3, wherein a key hole (55) into which a key is inserted is formed to the cylinder head portion and the fuel tank lid locking device (28) and the seat lock device (41) is selectively locked and unlocked by rotating the key inserted into the key hole (55) in different directions.

5. The motorcycle according to any of claims 1 to 4, characterized in that the side cover (8) has a rear portion (8b), an upper portion (8c) and a side portion (8a) continuous to the rear and upper portions through a smooth curved portion, and the fuel tank lid (12) has a curved surface for covering the opening (11) so that an outer surface of the fuel tank lid (12) is substantially made flash with an outer surface of the side cover (8) at which the opening is formed when the fuel tank lid (12) is closed.

6. The motorcycle according to claim 5, wherein a seal plate (21) is disposed inside the side cover (8) so as to seal, from inside, a gap (23) existing between an inner edge of the opening (11) and an outer peripheral edge of the fuel tank lid (12).

7. The motorcycle according to claim 5 or 6, wherein the fuel tank lid (12) is hinged to the side cover (8) at one end thereof so as to be pivotally opened and closed about a hinged portion (14).

8. The motorcycle according to any of claims 1 to 7, wherein said fuel tank lid (12) is provided with an engaging member (26, 30) disposed inside the side cover (8) and the fuel tank lid assembly includes a fuel tank lid locking device (28) which is engaged with the engaging member (26, 30) of the fuel tank lid (12), the fuel tank lid locking device (28) being arranged inside the side cover (8).

9. The motorcycle according to claim 8, wherein the fuel tank lid locking device (28) includes a lock pin (29) and the engaging member is a hook member (26) provided with a hole (30) with which the lock pin (29) is engaged.

10. The motorcycle according to claim 9, wherein the fuel tank lid locking device (28) further includes a lid lock bracket (33) securd to the side cover (8) and a lid openner assembly (34) mounted to the lid lock bracket (33), the lid openner assembly (34) including a pivotal link mechanism (35) operatively connected to the lock pin (29).

11. The motorcycle according to one of the claims 8, 9 or 10 wherein a seal plate (21) is disposed inside the side cover (8) so as to seal, from inside, a gap (23) existing between an inner edge of the opening (11) and an outer peripheral edge of the fuel tank lid (12).

12. The motorcycle according to claim 11, wherein the fuel tank lis (12) is provided with a hinge means (14) for pivotally mounting the fuel tank lid (12) thereabout, the hinge means (14) being hinged to the side cover (8) at one end of the fuel tank lid (12) and the seal plate (21) is mounted to the hinge means (14).

## Patentansprüche

1. Motorrad, umfassend eine Krafstofftankdeckelanordnung, wobei das Motorrad eine Seitenabdeckung aufweist, die an einem Hinterkörper (2) einer Motorradkarosserie (1) als hintere Verkleidung gelagert ist, wobei in der hinteren Verkleidung an einem Abschnitt, der einer Kraftstoff-Öl-Zuführöffnung (10) eines Kraftstofftanks (7) im Inneren der hinteren Verkleidung gegenüberliegt, eine Öffnung (11) ausgebildet ist, die Kraftstofftankdeckelanordnung einen Kraftstofftankdeckel (12) und eine Kraftstofftankdeckel-Schließeinrichtung (28) enthält, die im Inneren der hinteren Verkleidung vorgesehen ist, damit sie die zu öffnende oder zu schließende Öffnung (11) abdeckt, und einen Sitz (3), der von einer Sitzschloßeinrichtung (41) im Inneren der hinteren Verkleidung abgesperrt wird, **dadurch gekennzeichnet**, daß der Sitz (3) und der Kraftstofftankdeckel (12) über eine Schloßkabeleinrichtung (40), welche die Kraftstofftankdeckel-Schließeinrichtung (28) und die Sitzschloßeinrichtung (41) verbindet, selektiv versperrt und entsperrt werden.

2. Motorrad nach Anspruch 1, bei dem die Sitzschloßeinrichtung eine Zylinderschloßanordnung (41) enthält, die an dem Hinterkörper (2) des Motorrads angebracht ist, wobei die Zylinderschloßanordnung (41) einen nach außen freiliegenden Zylinderkopfabschnitt, einen Deckelschloßarm (42) und einen Sitzschloßarm (51) aufweist, von denen der Deckelschloßarm (52) und der Sitzschloßarm (51) schwenkbar in einem Zylinderkörper (50) der Zylinderschloßanordnung (41) mit einer gemeinsamen Achse angeordnet sind.

3. Motorrad nach Anspruch 2, bei dem die Schloßkabeleinrichtung (40) an einem Ende mit dem Deckelschloßarm (42) gekoppelt ist.

4. Motorrad nach Anspruch 2 oder 3, bei dem ein Schlüsselloch (55), in das ein Schlüssel eingeführt wird, in dem Zylinderkopfabschnitt ausgebildet ist, und die Kraftstofftankdeckel-Schließeinrichtung (28) und die Sitzschloßeinrichtung (41) selektiv dadurch verriegelt und entriegelt werden, daß der in das Schlüsselloch (55) eingeführte Schlüssel in unterschiedliche Richtungen gedreht wird.

5. Motorrad nach einem der Ansprüche 1 bis 4, **dadurch gekennzeichnet**, daß die Seitenabdeckung (8) einen hinteren Abschnitt (8b), einen oberen Abschnitt (8c) und einen Seitenabschnitt (8a) durchgehend mit dem hinteren und oberen Abschnitt über einen glattgekrümmten Bereich verbunden, aufweist, und daß der Kraftstofftankdeckel (12) zum Abdecken der Öffnung (11) eine gekrümmte Oberfläche in der Weise aufweist, daß eine Außenfläche des Kraftstofftankdeckels (12) bei geschlossenem Kraftstofftankdeckel (12) im wesentlichen bündig ist mit einer Außenfläche der Seitenabdeckung (8) dort, wo die Öffnung ausgebildet ist.

6. Motorrad nach Anspruch 5, bei dem im Inneren der Seitenabdeckung (8) eine Dichtungsplatte (21) angeordnet ist, um von innen her eine Lücke (23) zwischen dem Innenrand der Öffnung (11) und einem äußeren Umfangsrand des Kraftstofftankdeckels (12) abzudichten.

7. Motorrad nach Anspruch 5 oder 6, bei dem der Kraftstofftankdeckel (12) mit seinem einen Ende scharnierartig an der Seitenabdeckung (8) angebracht ist, um um einen Scharnierabschnitt (14) herum verschwenkend geöffnet und geschlossen zu werden.

8. Motorrad nach einem der Ansprüche 1 bis 7, bei dem der Kraftstofftankdeckel (12) mit einem im Inneren der Seitenabdeckung (8) angeordneten Eingriffsglied (26, 30) ausgestattet ist, und die Kraftstofftankdeckelanordnung eine Kraftstofftankdeckel-Schließeinrichtung (28) enthält, die mit dem Eingriffsglied (26, 30) des Kraftstofftankdeckels (12) in Eingriff steht, wobei die Kraftstofftankdeckel-Schließeinrichtung (28) im Inneren der Seitenabdeckung (8) angeordnet ist.

9. Motorrad nach Anspruch 8, bei dem die Kraftstofftankdeckel-Schließeinrichtung (28) einen Sperrzapfen (29) aufweist, und das Eingriffsglied ein Hakenglied (26) mit einem Loch (30) ist, in das der Sperrzapfen (29) eingreift.

10. Motorrad nach Anspruch 9, bei dem die Kraftstofftankdeckel-Schließeinrichtung (28) außerdem einen an der Seitenabdeckung (8) angeordneten Deckelschloßträger (33) und eine Deckelöffneranordnung (34), die an dem Deckelschloßträger (33) montiert ist, aufweist, wobei die Deckelöffneranordnung (34) einen mit dem Sperrzapfen (29) betrieblich verbundenen Schwenkgliedmechanismus (35) enthält.

11. Motorrad nach einem der Ansprüche 8, 9 oder 10, bei dem eine Dichtungsplatte (21) im Inneren der Seitenabdeckung (8) angeordnet ist, um von der Innenseite eine Lücke (23) abzudichten, die sich zwischen einem Innenrand der Öffnung (11) und einem Außenumfangsrand des Kraftstofftankdeckels (12) befindet.

12. Motorrad nach Anspruch 11, bei dem der Kraftstofftankdeckel (12) mit einer Scharniereinrichtung (14) ausgestattet ist, um die herum schwenkbar der Kraftstofftankdeckel (13) gelagert ist, wobei die Scharniereinrichtung (14) an der Seitenabdeckung (8) an einem Ende des Kraftstofftankdeckels (12) angelenkt ist und die Dichtungsplatte (21) an der Scharniereinrichtung (14) gelagert ist.

## Revendications

1. Motocycle, comprenant un ensemble de couvercle de réservoir à essence, Le motocycle ayant un couvercle latéral (8) monté sur un corps arrière (2) d'un corps de motocycle (1), à titre de capotage arrière, une ouverture (11), ménagée sur le capotage arrière en une partie tournée vers un orifice d'alimentation en carburant (10) appartenant à un réservoir à carburant (7) disposé à l'intérieur du capotage arrière, l'ensemble de couvercle de réservoir à carburant comprenant un couvercle de réservoir à carburant (12) et un dispositif de verrouillage de couvercle de réservoir à carburant (28) qui est prévu à l'intérieur du capotage arrière afin de couvrir l'ouverture (11) devant être ouverte ou fermée, et un siège (3) qui est verrouillé par un dispositif de verrouillage de siège (41) disposé à l'intérieur du capotage arrière, caractérisée en ce que le siège (3) et le couvercle de réservoir à carburant (12) sont sélectivement verrouillés et déverrouillés par l'intermédiaire d'un moyen à câble de verrouillage (40) assurant la liaison entre le dispositif de verrouillage de couvercle de réservoir à carburant (28) et le dispositif de verrouillage de siège (41).

2. Le motocycle selon la revendication 1, dans lequel le dispositif de verrouillage de siège comprend un ensemble de serrure à cylindre (41) fixé au corps arrière (2) du motocycle, l'ensemble de serrure à cylindre (41) ayant une partie de tête cylindrique exposée en externe, un bras de verrouillage de couvercle (42) et un bras de verrouillage de siège (51), le bras de verrouillage de couvercle (42) et le bras de verrouillage de siège (51) étant disposés à pivotement dans un corps cylindrique (50) de l'ensemble de serrure à cylindre (41), de manière à avoir un axe commun.

3. Le motocycle selon la revendication 2, dans lequel le moyen à câble de verrouillage (40) est connecté à une extrémité au bras de verrouillage de couvercle (42).

4. Le motocycle selon la revendication 2 ou 3, dans lequel un trou à clef (55), dans lequel une clef est insérée, est ménagé sur la partie de tête de cylindre et le dispositif de verrouillage de couvercle de réservoir à carburant (28), et le dispositif de verrouillage de siège (41) étant sélectivement verrouillé et déverrouillé par une rotation, dans différents états, de la clef ayant été insérée dans le trou à clef (55).

5. Le motocycle selon l'une quelconque des revendications 1 à 4, caractérisée en ce que le couvercle latéral (8) a une partie arrière (8b), une partie supérieure (8c) et une partie latérale (8a) qui est continue sur les parties arrière et supérieure, par l'intermédiaire d'une partie à incurvation douce, et le couvercle à réservoir à carburant (12) a une surface incurvée destinée à couvrir l'ouverture (11), de manière qu'une surface extérieure du couvercle de réservoir à carburant (12) soit rendue sensiblement affleurée vis-à-vis d'une surface extérieure du couvercle latéral (8) sur lequel l'ouverture est ménagée lorsque le couvercle de réservoir à carburant (12) est fermé.

6. Le motocycle selon la revendication 5, dans lequel une plaque d'étanchéité (21) est disposée à l'intérieur du couvercle latéral (8), de manière à isoler de façon étanche, depuis l'intérieur, un intervalle (23) existant entre un bord intérieur de l'ouverture (11) et un bord périphérique extérieur du couvercle à réservoir à carburant (12).

7. Le motocycle selon la revendication 5 ou 6, dans lequel le couvercle à réservoir à carburant (12) est articulé sur le couvercle latéral (8) à une extrémité de celui-ci, de manière à être ouvert et fermé par pivotement autour d'une partie articulée (14).

8. Le motocycle selon l'une quelconque des revendications 1 à 7, dans lequel ledit couvercle de réservoir à carburant (12) est pourvu d'un organe de contact (26, 30), qui est disposé à l'intérieur du couvercle latéral (8), et l'ensemble de couvercle de réservoir à carburant comprend un dispositif de verrouillage de couvercle de réservoir à carburant (28) qui est mis en contact avec l'organe d'engagement (26, 30) du couvercle de réservoir à carburant (12), le dispositif de verrouillage de couvercle de réservoir à carburant (28) étant agencé à l'intérieur du couvercle latéral (8).

9. Le motocycle selon la revendication 8, dans lequel le dispositif de verrouillage de couvercle à réservoir à carburant (28) comprend une tige de verrouillage (29) et l'organe d'engagement est un organe formant crochet (26) pourvu d'un trou (30) avec lequel la tige de verrouillage (29) est engagée.

10. Le motocycle selon la revendication 9, dans lequel le dispositif de verrouillage de couvercle à réservoir à carburant (28) comprend en outre un support de verrouillage de couvercle (33) fixé au couvercle latéral (8) et un ensemble ouvreur de couvercle (34) monté sur le support de verrouillage de couvercle (33), l'ensemble ouvreur de couvercle (34) comprenant un mécanisme de liaison pivotante (35) relié fonctionnellement à la tige de verrouillage (29).

11. Le motocycle selon l'une des revendications 8, 9 ou 10, dans lequel une plaque d'étanchéité (21) est disposée à l'intérieur du couvercle latéral (8), de manière à isoler de façon étanche depuis l'intérieur un intervalle (23) existant entre un bord intérieur de l'ouverture (11) et un bord périphérique extérieur du couvercle de réservoir à carburant (12).

12. Le motocycle selon la revendication 11, dans lequel le couvercle de réservoir à carburant (12) est pourvu d'un moyen formant charnière (14) permettant un montage pivotant du couvercle de réservoir à carburant (12) autour de lui, le moyen formant charnière (14) étant articulé sur le couvercle latéral (8) à une extrémité du couvercle de réservoir à carburant (12) et la plaque d'étanchéité (21) est montée sur le moyen formant charnière (14).
